# EUROPEAN PATENT APPLICATION

(11) **EP 4 635 850 A1**
(43) Date of publication of application: **22.10.2025**
(21) Application number: 24170253.9
(22) Date of filing: 15.04.2024
(51) Int. Cl.: B64D 15/12

(54) **HEATED LEADING EDGE STRUCTURE FOR AN AIRCRAFT, ASSOCIATED SLAT, WING AND AIRCRAFT**

(71) Applicant: Airbus Operations GmbH, 21129 Hamburg (DE)
(72) Inventor: Schlipf, Bernhard, 21129 Hamburg (DE); Daandels, Dort, 21129 Hamburg (DE)
(74) Representative: Bird & Bird LLP - Hamburg

(57) **Abstract**

This heated leading edge structure (14) for an aircraft (10), comprises:
- a leading edge panel (20) having an outer surface (32) configured for contacting with an ambient flow (A), and an inner surface (34) opposite the outer surface (32),
- a reinforcing member (22), connected to the inner surface (34) of the leading edge panel (20), and
- a heating arrangement (24) configured for heating the leading edge panel (20); the heating arrangement (24) comprising at least one indirect heating device (44) mounted on the reinforcing member (22), said indirect heating device (44) being configured for heating the leading edge panel (20) at least by conduction through the reinforcing member (22).

## Description

The present disclosure relates to a heated leading edge structure for an aircraft. This disclosure also relates to a slat comprising such a heated leading edge structure and to a wing, comprising such a slat and/or such a heated leading edge structure. This disclosure further relates to an aircraft comprising such a wing and/or such a slat and/or such a heated leading edge structure.

In the domain of heated leading edge structures, it is known to use heating arrangements that are configured for heating a leading edge panel. These arrangement are critical to prevent accretion of ice on the leading edge panel of the structure. Ice accretion on leading edge panels of an aircraft strongly impact the capabilities of the aircraft. The heating arrangements of leading edge structures are therefore critical to ensure safety of operation of aircrafts.

In known heated leading edge structures, it is for example known to use bleed air introduced in a cavity formed by a leading edge panel in order to warm air within the cavity and thus warm the leading edge structure. Such heating however relies on complex and heavy heating devices.

Alternative solution have then been developed to reduce complexity and weight of heating devices and of the heated leading edge structures in general. A proposed solution relies for example on heating devices, for example electric, directly arranged on leading edge panels of the leading edge structure. Such devices provide a direct heating of the leading edge panels and ensure obtaining a simple and lightweight heated leading edge structure for an aircraft.

The above mentioned known leading edge devices are however not entirely satisfying. Indeed, such systems are either complex and heavy, or they provide an inhomogeneous heating of the leading edge panel, leading to the apparition of undesired cold spots. This is for example the case when the heated leading edge structure comprises a reinforcing member that prevents the heating of the leading edge panel at a connection region between the reinforcing member and the heating arrangement.

An object of the present invention is therefore to provide a heated leading edge structure for an aircraft that is simple and lightweight and which is not subject to local ice accretion.

To this end, the invention relates to a heated leading edge structure for an aircraft, comprising:
- a leading edge panel having an outer surface configured for contacting with an ambient flow, and an inner surface opposite the outer surface,
- a reinforcing member, connected to the inner surface of the leading edge panel, and
- a heating arrangement configured for heating the leading edge panel;
wherein the heating arrangement comprises at least one indirect heating device mounted on the reinforcing member, said indirect heating device being configured for heating the leading edge panel at least by conduction through the reinforcing member.

The use of indirect heating device mounted on the reinforcing member and configured for heating the leading edge panel at least by conduction through the reinforcing member is especially advantageous since this allows heating the leading edge panel specifically in typical cold spot regions, contributing to homogenizing the heating on the leading edge panel.

According to other advantageous aspects of the invention, the heated leading edge structure comprises one or more of the following features taken alone or according to all technically possible combinations:
- the indirect heating device is mounted on the reinforcing member in a detachable manner;
- the indirect heating device is formed as a heater mat;
- the reinforcing member comprises a web portion extending orthogonally to the leading edge panel, the indirect heating device being mounted on said web portion;
- the reinforcing member comprises a flange portion, the flange portion extending on the inner surface of the leading edge panel to connect the reinforcing member to said inner surface;
- the heated leading edge structure further comprises a plurality of fasteners connected to the reinforcing member, the indirect heating device being configured to cooperate with said fasteners to be mounted on the reinforcing member;
- the heated leading edge structure further comprises an adhesive layer, the indirect heating device being connected to the reinforcing member by the adhesive layer;
- the heating arrangement further comprises at least one direct heating device mounted on the inner surface of the leading edge panel;
- the heating arrangement further comprises:
   - at least one temperature sensor, and
   - a control unit, connected to the at least one temperature sensor, the control unit comprising:
      + an acquisition module, configured to acquire a temperature information from the at least one temperature sensor, and
      + a control module, configured to control the at least one indirect heating device as a function of the acquired temperature information;
- the control module is further configured to control the at least one direct heating device as a function of the acquired temperature information;
- the heating arrangement comprises a plurality of temperature sensors, the control module being configured to control at least one of the direct or indirect heating devices independently of another of the direct or indirect heating devices; and
- the temperature sensor:
   - is configured to measure a temperature of one of the heating devices, or
   - is configured to measure a temperature of the inner surface of the leading edge panel, or
   - is configured to measure an ambient temperature in a cavity defined by the inner surface of the leading edge panel.

The invention also relates to a slat comprising a heated leading edge structure as presented above.

The invention also relates to a wing comprising a heated leading edge structure as presented above and/or a slat as presented above.

The invention also relates to an aircraft comprising a heated leading edge structure as above mentioned and/or a slat as above mentioned and/or a wing as above mentioned.

The invention will be better understood when reading the following description, which is given solely by way of example and with reference to the appended drawings, in which:
- Figure 1 is a schematic view of an aircraft comprising a heated leading edge structure according to the invention;
- Figure 2 is a schematic detailed view of the heated leading edge structure presented on figure 1, wherein the direct heating device is not illustrated;
- Figure 3 is a section view of the heated leading edge structure presented on figures 1 and 2, wherein the direct heating device is illustrated; and
- Figure 4 is a schematic representation of the heated leading edge structure according to figures 1 to 3, in which the control unit and sensors of the heated leading edge structure are made visible.

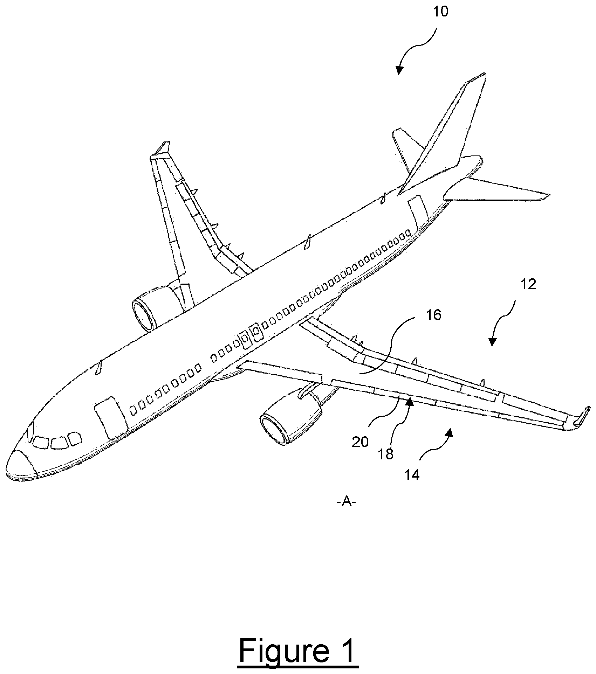

Referring to figure 1, an aircraft 10 comprises a wing 12, the wing 12 comprising a heated leading edge structure 14. In particular, in the example presented in figure 1, the wing 12 comprises a fixed wing portion 16, and a slat 18, moveable relative to fixed wing portion 16. In this example, the slat 18 comprises the heated leading edge structure 14. The heated leading edge structure 14 then defines for example a leading edge of the slat 18.

In other or complementary examples the fixed wing portion 16 comprises the heated leading edge structure 14. The heated leading edge structure 14 then defines for example a leading edge of the fixed wing portion 16.

The aircraft 10 is for example an airplane, and preferably an airliner.

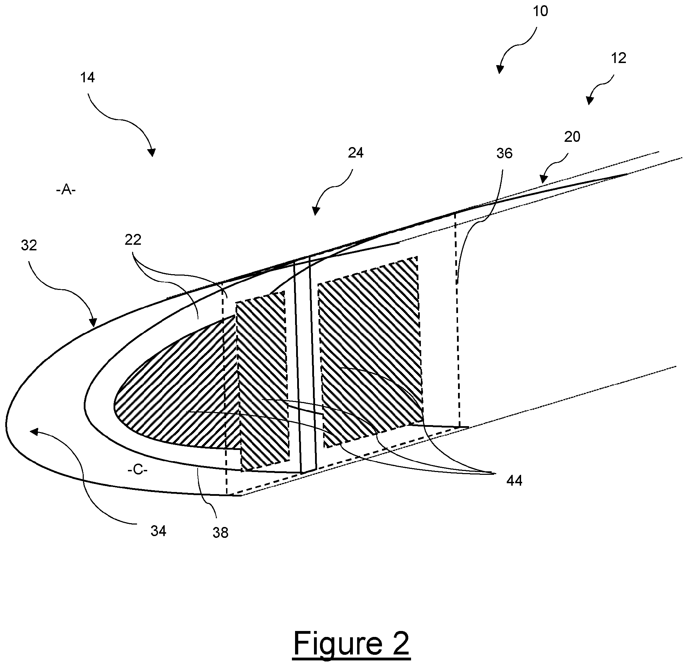

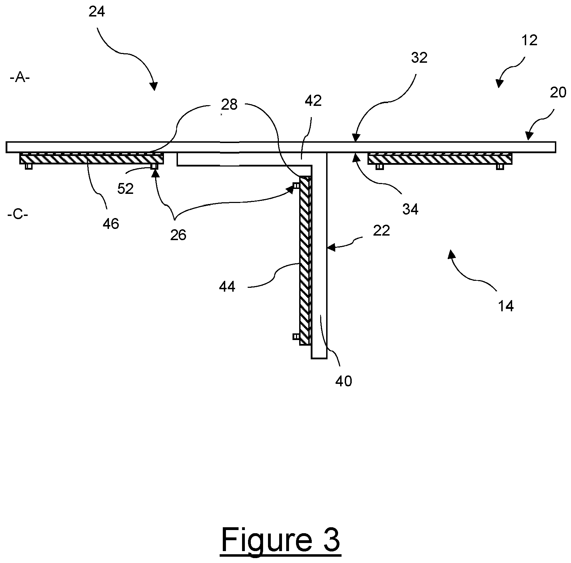

As visible from figures 2 and 3, the heated leading edge structure 14 comprises a leading edge panel 20, a reinforcing member 22 and a heating arrangement 24. The heated leading edge structure 14 also comprises for example a plurality of fasteners 26 and an adhesive layer 28.

As presented in more detail later, the plurality of fasteners 26 and/or the adhesive layer 28 is for example configured for connecting the reinforcing member 22 and the heating arrangement 24.

The leading edge panel 20 is preferably made of a metal material, such as aluminium, steel or titan, but might also be formed of other material, such as fibre reinforced plastic material.

The leading edge panel 20 comprises an outer surface 32 and an inner surface 34.

The outer surface 32 is configured for contacting an ambient flow A. The ambient flow is in particular the flow in which the aircraft 10 evolves, that is the outside air for the aircraft 10.

The inner surface 34 is opposite the outer surface 32. In other words, the outer surface 32 and the inner surface are defining opposite surfaces of the leading edge panel 20.

As visible from figure 2, the inner surface 34 is for example defining a cavity C of the leading edge panel 20.

The reinforcing member 22 is preferably made of a metal material, such as aluminium, steel or titan, but might also be formed of other material.

The reinforcing member 22 preferably has a very high thermal conductivity, for example above 50 W/m*K, preferably above 100 W/m*K, further preferably above 150 W/m*K.

The reinforcing member 22 is connected to the inner surface of the leading edge panel 20. The reinforcing member 22 is for example extending in the cavity C defined by the leading edge panel 20.

In a non-illustrated example, an intermediate element such as for example a sealing, a shim or an adhesive layer, is arranged between the reinforcing member 22 and the inner surface 34 of the leading edge panel 20. The intermediate element for example connects the reinforcing member 22 and the inner surface of the leading edge panel 20.

The intermediate element is for example made of a non-metallic material.

The intermediate element preferably has a high thermal conductivity, for example above 0.2 W/m*K, preferably above 0.5 W/m*K, further preferably above 1 W/m*K.

The reinforcing member 22 is for example a spar 36 or a rib 38 of the aircraft 10. In particular, the reinforcing member 22 is for example a spar 36 or a rib 38 of the wing 12 or of the slat 18.

In the rest of the description, it is understood that a spar of a wing/slat extends substantially along an elongation direction of the wing/slat, and that a rib of the wing/slat extends substantially along a chord direction of the wing/slat.

As presented in figure 2, the heated leading edge structure 14 comprises for example a plurality of reinforcing members 22. In particular, in the example of figure 2, the plurality of reinforcing members 22 comprises at least one spar 36 and one rib 38.

As illustrated in figure 3, the reinforcing member 22 comprises for example a web portion 40 and a flange portion 42.

The web portion 40 extends for example substantially orthogonally to leading edge panel 20.

When the reinforcing member 22 is a spar, the web portion 40 extends for example along a plane substantially parallel to the elongation direction of the wing/slat. When the reinforcing member 22 is a rib, the reinforcing web portion extends for example along a plane substantially parallel to the chord direction of the wing/slat.

The flange portion 42 extends for example on the inner surface 34 of the leading edge panel 20. In particular, the flange portion 42 extends for example on the inner surface 34 of the leading edge panel 20 to connect the reinforcing member 22 to the inner surface 34 of the leading edge panel 40. The flange portion 42 is for example fastened to the inner surface 34.

The heating arrangement 24 is configured for heating the leading edge panel 20.

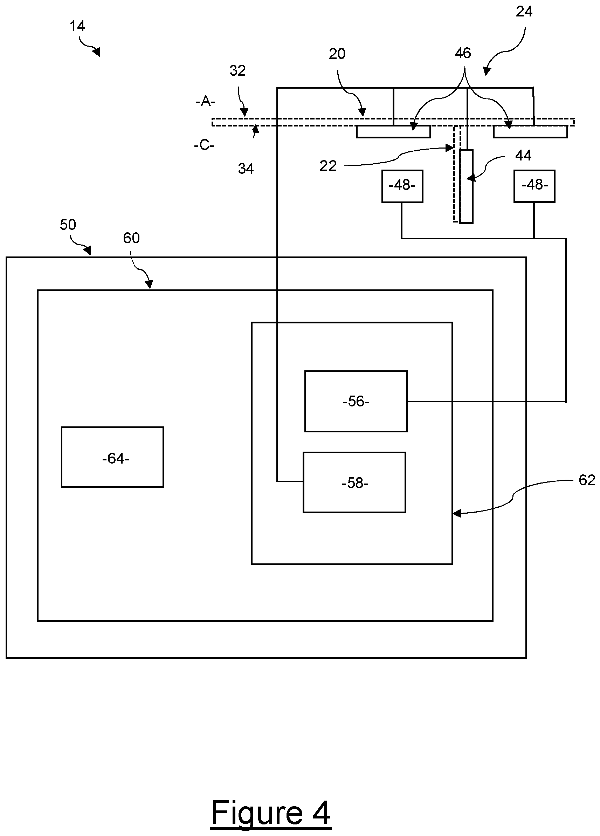

As visible from figures 2 to 4, the heating arrangement 24 comprises at least one indirect heating device 44. As illustrated in figures 3 and 4, the heating arrangement 24 also preferably comprises at least one direct heating device 46. Furthermore, as illustrated in figure 4, the heating arrangement 24 for example also comprises at least one temperature sensor 48 and a control unit 50.

As visible from figures 2 to 4, the indirect heating device 44 is mounted on the reinforcing member 22. For example, and as presented in more details below, the indirect heating device 44 is mounted on the reinforcing member in a detachable manner. In other words, the indirect heating 44 device is for example removable from the reinforcing member 22 and allows a replacement of the indirect heating device 44 without damaging said indirect heating device 44 and/or without damaging the reinforcing member 22

For example, and as visible from figure 3, the indirect heating device 44 is mounted on the web portion 40 of the reinforcing member 22. In alternative, in a non-illustrated embodiment, the indirect heating device 44 is for example mounted on the flange portion 42 of the reinforcing member 22.

The indirect heating element 44 is configured for heating the leading edge panel 20 at least by conduction through the reinforcing member 22. In other word, when the indirect heating element is operating, heat generated by the indirect heating device 44 is conducted by the reinforcing member 22 to the leading edge panel 20.

The indirect heating device 44 is for example further configured for heating air enclosed within cavity C defined by the leading edge panel 20 and to then heat the leading edge panel 20 by convection.

As visible from figure 2 to 4, the indirect heating device 44 is for example formed as a heater mat and is for example an electrothermal heater mat. The indirect heating device 44 is for example configured to output more than 100 W/m² in the form of heat.

The indirect heating device 44 is for example flexible to avoid delamination upon smaller impacts on the leading edge panel 20.

In the example presented in details on figure 3, the heating leading edge structure 14 comprises a plurality of fasteners 26 and an adhesive layer 28 for fastening the indirect heating device 44 to the reinforcing member 22. In other embodiments, the heating leading edge structure 14 comprises either a plurality of fasteners 26 or adhesive layer 28 for fastening the indirect heating device 44 to the reinforcing member 22.

As presented in figure 3, the indirect heating device 44 is connected to the reinforcing member by the adhesive layer 28.

Preferably, the adhesive layer 28 is flexible to avoid delamination upon smaller impacts.

Further, the adhesive layer 28 preferably has a high thermal conductivity, preferably above 0.2 W/m*K, further preferred above 0.5 W/m*K, to transfer heat from the indirect heating device 44 to the reinforcing member 22 in an efficient and possibly unhindered way.

The adhesive layer 28 preferably further has a relatively low adhesive strength, preferably below 0.4 N/mm (force in N per width of the heater device in mm), to allow easy detachment of the indirect heating device 44, ideally in a non-destructive manner. In particular, the chemical composition of the adhesive layer is adapted such that it allows a peel of the indirect heating device 44 from the leading edge panel at low forces, preferably ranging below 0.4 N/mm.

The adhesive layer 28 is further preferably formed with a temperature dependency. In particular, the adhesive layer 28 is formed in a way that it sustains the loading spectrum of the normal aircraft operation, but at higher temperatures above the operating temperature window, e.g. above 100°C, which might be applied during maintenance when the indirect heating device 44 is to be removed, the adhesive layer 28 becomes weak enough so that the indirect heating device 44 can be peeled off by hand or by tool from the reinforcing member 22 at peel forces lower that 0.4 N/mm.

In the example of figure 3, the fasteners 26 are connected to the reinforcing member 22. The indirect heating device 44 is configured to cooperate with the fasteners 26 to be mounted on the reinforcing member 22.

Each fastener 26 is for example attached by adhesive to the reinforcing member 22 and engages the indirect heating device 44. To that end, each fastener 26 comprises for example a pin 52 extending away from the reinforcing member 22 and engaging a hole (not illustrated) in the indirect heating device 44. The pin 52 is for example provided with a retainer device (not illustrated) at its free end for retaining and securing the pin 5 in the hole (not illustrated).

As visible from figures 3 and 4, the direct heating device 46 is in itself similar to the indirect heating device 4. In particular, the direct heating device 46 only differs from the indirect heating device 44 in that it is mounted on the leading edge panel 20, preferably on the inner surface 34 of the leading edge panel 20, instead of being mounted on the reinforcing member 22. The direct heating device 46 is then configure for directly heating the leading edge panel 20, for example by direct conduction.

In particular, and as visible from figure 3, the direct heating device 46 is also mounted in a detachable relatively to the rest of the heated leading edge structure 24 and in particular, relatively to the leading edge panel 20.

To that end, the heated leading edge structure 14 for example comprises further fasteners 26 and/or adhesive layers 28 as presented above, for fastening the direct heating device 46 to the leading edge panel 20.

The temperature sensor 48 is configured to measure a temperature information Tm. As schematically presented on figure 4, the temperature sensor 48 is arranged in the cavity C defined by the inner surface 34 of the leading edge panel 20. In alternative, and for example, the temperature sensor 48 is arranged on the indirect heating device 44, on the direct heating device 46, on the leading edge panel 20 or on the reinforcing member 22.

The temperature sensor 48 is for example configured to measure a temperature of one of the heating device, that is the temperature of one of the indirect heating device 44 or of one of the direct heating device 46. In alternative, the temperature sensor 48 is configured to measure a temperature of the inner surface 34 of the leading edge panel 20. In another alternative, the temperature sensor 48 is configured to measure an ambient temperature in the cavity C defined by the inner surface 34 of the leading edge panel 20.

As illustrated in figure 4, the heating arrangement 24 for example comprises a plurality of temperature sensors 48.

The control unit 50 of the heating arrangement 24 is connected to the at least one temperature sensor 48.

As visible from figure 4, the control unit 50 comprises an acquisition module 56 and a control module 58.

The acquisition module 56 is connected to the temperature sensor 48 and is configured to acquire a temperature information Ta from the at least one temperature sensor. For example, the temperature information Ta acquired from the acquisition module corresponds and/or is the same as the temperature information Tm measured by the or each temperature sensor(s) 48.

The control module 56 is configured to control the at least one indirect heating device 44 as a function of the acquired temperature information Ta. Furthermore, and for example, the control module 56 is also configured to control at least one direct heating device 46 as a function of the acquired temperature information Ta.

The control module 56 is for example configured to control at least one of the direct 44 or indirect 46 heating devices independently of another of the direct 46 or indirect 46 heating devices, preferably depending on the temperature information Ta acquired from a plurality of temperature sensors 48. In other words, each heating devices 44, 46 is for example independently controlled by the control module 56.

To control the direct 46 and/or indirect 44 heating devices, the control module 56 is for example configured to store and/or obtain power profiles for said heating devices 44, 46.

The power profiles are for example configured to provide a control law for the power output to each of the direct 46 and/or indirect 44 heating device as a function of the acquired temperature information Ta. The power profiles are in particular configured to control the power output to each of the direct 46 and/or indirect 44 heating such that the acquired temperature Ta reaches and/or is maintained to a target temperature Tt.

For example, the power profiles for the direct 46 and indirect 44 heating devices is different. Preferably, the power profiles for each of the direct 46 and indirect 44 heating device is different and is for example chosen for a homogeneous heating of the leading edge panel 20.

In the example of figure 4, the control unit 50 is formed as an information processing unit 60 comprising, for example, a memory 62 associated with a processor 64.

In the example of figure 4, the acquisition module 56 and the control module 58 are each produced in the form of software executable by the processor 64. The memory 62 is then able to store an acquisition software, designed to acquire temperature information Ta from the at least one temperature sensor 48, and a control software, designed to control the at least one indirect heating device 44 as a function of the acquired temperature information Ta. The processor 64 of the information processing unit 60 is then able to execute the acquisition software and the control software.

In a variant (not shown), the acquisition module 56 and the control module 58 are each produced in the form of a programmable logic components, such as a FPGA (Field Programmable Gate Array), or in the form of a dedicated integrated circuit, such as an ASIC (Application Specific Integrated Circuit), or in the form of any combination of ASIC, FPGA and/or software.

In another variant (not shown) the acquisition module 56 and the control module 56 are each implemented as analog signal processing devices.

When the control unit 50 is made in the form of one or several software programs, i.e., in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

As previously presented, the use of an indirect heating device 44 being configured for heating the leading edge panel 20 at least by conduction through the reinforcing member 22 is especially relevant to homogenize the heating on the leading edge panel while being simple and lightweight.

Furthermore, having the indirect heating device 44 mounted on the reinforcing member 22 in a detachable manner is especially advantageous to allow a quick and easy maintenance of the heated leading edge structure 14.

Using an indirect heating device 44 formed as a heater mat is especially advantageous to have an effective, compact and lightweight heating arrangement 24.

Arranging the indirect heating device 44 on a web portion of the reinforcing member 22 and having the flange portion 42 of the reinforcing member 22 connecting the reinforcing member 22 to the inner surface 34 of the leading edge panel 20 are both advantageous aspects improving the integration of the heating arrangement 24 in the heated leading edge structure 14 while improving heat transfer between the indirect heating device 44 and the leading edge panel 20.

The above described fasteners 26 and adhesive layer 28 are especially advantageous for providing an easily maintainable heated leading edge structure 14.

The combined use of direct 46 and indirect 44 heating devices offers a simple and effective heating arrangement for the heated leading edge structure 14.

Having a heated leading edge structure comprising at least one temperature sensor 48 and a control unit 50 is particularly beneficial for improving the efficiency and accuracy of the heating of the leading edge panel 20 but also improves safety of operation of the heated leading edge structure 14.

Having at least one of the direct 46 or indirect 44 heating devices controlled independently of another of the direct 46 or indirect 44 heating devices is also especially beneficial for improving the heating accuracy, and in turn the performance, of the heating arrangement 24.

## Claims

1. Heated leading edge structure (14) for an aircraft (10), comprising:
- a leading edge panel (20) having an outer surface (32) configured for contacting with an ambient flow (A), and an inner surface (34) opposite the outer surface (32),
- a reinforcing member (22), connected to the inner surface (34) of the leading edge panel (20), and
- a heating arrangement (24) configured for heating the leading edge panel (20);
**characterized in that** the heating arrangement (24) comprises at least one indirect heating device (44) mounted on the reinforcing member (22), said indirect heating device (44) being configured for heating the leading edge panel (20) at least by conduction through the reinforcing member (22).

2. Heated leading edge structure (14) according to claim 1, wherein the indirect heating device (44) is mounted on the reinforcing member (22) in a detachable manner.

3. Heated leading edge structure (14) according to claims 1 or 2, wherein the indirect heating device (44) is formed as a heater mat.

4. Heated leading edge structure (14) according to any of the preceding claims, wherein the reinforcing member (22) comprises a web portion (40) extending orthogonally to the leading edge panel (20), the indirect heating device (44) being mounted on said web portion (40).

5. Heated leading edge structure (14) according to any of the preceding claims, wherein the reinforcing member (22) comprises a flange portion (42), the flange portion (42) extending on the inner surface (34) of the leading edge panel (20) to connect the reinforcing member (22) to said inner surface (34).

6. Heated leading edge structure (14) according to any of the preceding claims, further comprising a plurality of fasteners (26) connected to the reinforcing member (22), the indirect heating device (44) being configured to cooperate with said fasteners (26) to be mounted on the reinforcing member (22).

7. Heated leading edge structure (14) according to any of the preceding claims, further comprising an adhesive layer (28), the indirect heating device (44) being connected to the reinforcing member (22) by the adhesive layer (28).

8. Heated leading edge structure (14) according to any of the preceding claims, wherein the heating arrangement (24) further comprises at least one direct heating device (46) mounted on the inner surface (34) of the leading edge panel (20).

9. Heated leading edge structure (14) according to any of the preceding claims, wherein the heating arrangement (24) further comprises:
- at least one temperature sensor (48), and
- a control unit (50), connected to the at least one temperature sensor (48), the control unit (50) comprising:
+ an acquisition module (56), configured to acquire a temperature information (Ta) from the at least one temperature sensor (48), and
+ a control module (58), configured to control the at least one indirect heating device (44) as a function of the acquired temperature information (Ta).

10. Heated leading edge structure (14) according to claim 9 in its dependency to claim 8, wherein the control module (58) is further configured to control the at least one direct heating device (46) as a function of the acquired temperature information (Ta).

11. Heated leading edge structure (14) according to claim 10, wherein the heating arrangement (24) comprises a plurality of temperature sensors (48), the control module (58) being configured to control at least one of the direct (46) or indirect (44) heating devices independently of another of the direct (46) or indirect (44) heating devices.

12. Heated leading edge structure (14) according any of the claims 9 to 11, wherein the temperature sensor (48):
- is configured to measure a temperature (Tm) of one of the heating devices (44, 46), or
- is configured to measure a temperature (Tm) of the inner surface (34) of the leading edge panel (20), or
- is configured to measure an ambient temperature (Tm) in a cavity (C) defined by the inner surface (34) of the leading edge panel (20).

13. Slat (18) comprising a heated leading edge structure (14) according any of the claims 1 to 12.

14. Wing (12) comprising a heated leading edge structure (14) according any of the claims 1 to 12 and/or a slat (18) according to claim 13.

15. Aircraft (10) comprising a heated leading edge structure (14) according any of the claims 1 to 12 and/or a slat (18) according to claim 13 and/or a wing (12) according to claim 14.
